Europäisches Patentamt

European Patent Office

Office européen des brevets

(19)

(11) Publication number: **0 227 300 B1**

(12) **EUROPEAN PATENT SPECIFICATION**

(45) Date of publication of patent specification: **25.09.91**  (51) Int. Cl.⁵: **H01B 3/44, C08L 23/12**

(21) Application number: **86309043.7**

(22) Date of filing: **19.11.86**

(54) **Electrically insulating material comprising stretched polypropylene film.**

(30) Priority: **20.11.85 JP 262203/85**

(43) Date of publication of application:
**01.07.87 Bulletin 87/27**

(45) Publication of the grant of the patent:
**25.09.91 Bulletin 91/39**

(84) Designated Contracting States:
**DE FR GB IT NL**

(56) References cited:
**EP-A- 0 151 883**
**EP-A- 0 152 701**
**EP-A- 0 171 199**
**DE-A- 3 047 153**

(73) Proprietor: **SUMITOMO CHEMICAL COMPANY, LIMITED**
**Kitahama 4-chome 5-33**
**Chuo-ku Osaka 541(JP)**

(72) Inventor: **Kakugo, Masahiro**
**4-1096-17, Mimomi-cho**
**Narashino-shi Chiba(JP)**
Inventor: **Wakatsuki, Kizuku**
**1-8-60, Aobadai**
**Ichihara-shi Chiba(JP)**
Inventor: **Wakamatsu, Kazuki**
**1-9-926, Yushudainishi**
**Ichihara-shi Chiba(JP)**
Inventor: **Ima, Seiichiro**
**1-9-923, Yushudainishi**
**Ichihara-shi Chiba(JP)**
Inventor: **Miyatake, Tatsuya**
**1-9-524, Yushudainishi**
**Ichihara-shi Chiba(JP)**

(74) Representative: **Moore, Anthony John et al**
**Gee & Co. Chancery House Chancery Lane**
**London WC2A 1QU(GB)**

## Description

The present invention relates to an electrically insulating material comprising a stretched polypropylene film having excellent electrical characteristics.

Stretched polypropylene films, particularly biaxially stretched films, are widely employed as electrically insulating materials as in condensers because of their excellent electrical, mechanical and chemical properties.

Important electrical characteristics required for electrically insulating materials to be used in condensers include dielectric breakdown voltage. Films having a high dielectric breakdown voltage would make it possible to reduce the film thickness, which leads to miniaturization of condensers, and thus have a considerable significant meaning in industry.

An object of the present invention is to provide an electrically insulating material having a high dielectric breakdown voltage.

Our EP-A-0151883 and 0152701 each describe compositions of a crystallinepolypropylene containing a vinylcycloalkane having 6 or more carbon atoms, which can be present in amount 0.05 to 10,000 ppm by wt; the composition can be molded to form a sheet or film; e.g. by extrusion, pressure forming, injection molding, blow molding and stretching. The materials have good transparency and stiffness.

Our EP-A-0171991 was published after the date of publication of the present application but has an earlier priority date: it is therefore relevant for novelty under Art. 54(3) of the EPC. It discloses the extrusion of a composition of polypropylene and preferably 0.05 to 5,000 ppm by wt of a vinyl cycloalkane such as vinylcyclohexane; the composition is molded into a sheet e.g. by extrusion, and in the examples this is cooled to form a sheet (or film) 0.5mm thick which can be molded to a desired shape.

There is no description of the ash content, solubility in boiling heptane or electrical insulation properties of any of the materials in our prior specifications.

We have now found how to obtain a film of very high dielectric breakdown voltage from a polypropylene composition of the aforesaid type.

According to the present invention we provide an electrically insulating material comprising a stretched polypropylene film which is obtained by at least uniaxially stretching a polypropylene composition containing from 0.05 to 10,000 ppm by weight of a polymer of a 3-branched $\alpha$-olefin having 6 or more carbon atoms and/or a vinylcycloalkane having 6 or more carbon atoms in a monomer unit thereof, wherein said polypropylene composition has a total ash content of not more than 30 ppm by weight, a boiling heptane-insoluble portion having a propylene isotactic pentad fraction of 0.955 or more, a content of a boiling heptane-insoluble portion of from 91.0 to 98.0% by weight, and a 20 °C xylene-soluble portion having an intrinsic viscosity of not more than 1.0 dl/g.

The high dielectric breakdown voltage achieved in the present invention is preferably 670 V/$\mu$m or more, and more preferably 680 V/$\mu$m or more.

The polymer of the 3-branched $\alpha$-olefin and/or vinylcycloalkane each having 6 or more carbon atoms which can be used in the present invention is used in an amount as small as possible so as not to alter physical properties inherent in the polypropylene. In this connection, the content of the polymer of the 3-branched $\alpha$-olefin and/or vinylcycloalkane in the polypropylene composition ranges from 0.05 to 10,000 ppm by weight, preferably from 0.5 to 5,000 ppm by weight, and more preferably from 0.5 to 1,000 ppm by weight, in terms of a monomer unit thereof.

Specific examples of the 3-branched $\alpha$-olefin or vinylcycloalkane each having 6 or more carbon atoms which can be used as a monomer component in the present invention include 3,3-dimethylbutene-l, 3-methylpentene-l, 3-methylhexene-l, 3,5,5-trimethylhexene-l, vinylcyclopentane, vinylcyclohexane and vinylnorbornane. Of these, 3-methylpentene-l, vinylcyclopentane, and vinylcyclohexane are particularly preferred.

The polypropylene composition containing the polymer of the 3-branched $\alpha$-olefin and/or vinylcycloalkane each having 6 or more carbon atoms according to the present invention is obtained by, for example, (1) a process comprising polymerizing the 3-branched $\alpha$-olefin and/or vinylcycloalkane each having 6 or more carbon atoms in the presence of a Ziegler-Natta catalyst, etc., and subsequently homopolymerizing propylene or copolymerizing propylene and other $\alpha$-olefins; (2) a process comprising mixing the polymer as prepared in (1) above with a homopolymer of propylene or a copolymer of propylene and other $\alpha$-olefins; or (3) a process comprising mixing a polymer of the 3-branched $\alpha$-olefin and/or vinylcycloalkane each having 6 or more carbon atoms with a homopolymer of propylene or a copolymer of propylene and other $\alpha$-olefins. The mixing of polymers as in the process (2) or (3) can be carried out in a usual manner by means of rolls, or an extruder.

The thus prepared polypropylene composition is processed into an extrusion molded sheet which is then at least uniaxially stretched in usual manner, to obtain the stretched polypropylene film according to the present invention.

The polypropylene composition to be used in the present invention may further contain various commonly employed additives such as antioxidants, if desired.

The polypropylene composition to be used in the present invention has a total ash content of not more than 30 ppm, and preferably not more than 20 ppm, from the standpoint of ensuring electrical characteristics, especially dielectric breakdown voltage.

With reference to the propylene chain moiety of the polypropylene composition to be used in the present invention, those having high stereoregularity are preferred in view of oil resistance. In this connection the polypropylene composition has a propylene isotactic pentad fraction of a boiling heptane-insoluble portion (hereinafter often abbreviated as "BHIS") of 0.955 or more, a content of a boiling heptane-insoluble portion (BHIS) of from 91.0 to 98.0% by weight, and an intrinsic viscosity $[\eta]$ of a 20°C xylene-soluble portion (hereinafter often abbreviated as "CXS") of not more than 1.0 d/g.

Polypropylenes having high crystallinity that are suited for electric applications include, for example, those disclosed in Japanese Patent Publication No. 50853/81.

The stretched polypropylene film according to the present invention is used as a dry or oil-immersion type condenser with a metal, e.g., aluminum, being vacuum-deposited on at least one side thereof, or with a metal foil, e.g., an aluminum foil, being rolled up therein.

This invention will now be illustrated in greater detail with reference to the following Examples, but it should be understood that they are not intended to limit the present invention. In these Examples, measurements of various physical properties of polymers were conducted in accordance with the following methods.

(1) Intrinsic Viscosity $[\eta]$:

Measured in tetralin at 135°C by the use of an Ubbellohde viscometer.

(2) Content of 20°C Xylene-Soluble Portion (CXS):

A polypropylene sample weighing 5 g is completely dissolved in 500 ml of boiling xylene. The solution is cooled to 20°C, followed by allowing to stand for 4 hours. The solution is then subjected to filtration to separate a filtrate from a precipitate, and the filtrate is dried to solid, followed by drying at 60°C under reduced pressure. The solid is weighed to determine the content (% by weight) of the 20°C xylene-soluble portion (CXS).

(3) Content of Boiling Heptane-Insoluble Portion (BHIS):

The 20°C xylene-insoluble portion obtained in (2) above is dried and subjected to a Soxhlet extration with boiling n-heptane for 8 hours. The eluted portion is dried by evaporation and weighed to measure the content of the n-heptane eluted portion. Then, the content (% by weight) of BHIS is calculated by the following equation:

$$\frac{W_1 - W_2}{W_1} \times 100$$

wherein $W_1$ is the weight of a sample (in this case, $W_1 = 5$ g) and $W_2$ is the sum of the content of the n-heptane eluted portion and the content of the 20°C xylene-soluble portion (CXS).

(4) Propylene Isotactic Pentad Fraction:

The isotactic pentad fraction is measured by use of $^{13}$C-NMR spectrum as described in Zambelli et al, Macromolecules, 6, 925 (1973). This is a fraction of a central propylene monomer unit in which five propylene monomers are bonded, in sequence, in the meso configuration. The assignment of the NMR absorption peak is determined as described in Macromolecules, 8, 687 (1975).

(5) Dielectric Breakdown Voltage:

3

A direct voltage is applied to a specimen using a dielectric strength tester (manufactured by Kasuga Denki K.K.), and the voltage is elevated at a rate of 500 V/sec to determine breakdown voltage (V) in accordance with JIS-2330. The film thickness is measured by means of a micrometer, and the dielectric breakdown voltage is obtained from the following formula:

$$\text{Dielectric Breakdown Voltage} = \frac{\text{Breakdown Voltage (V)}}{\text{Film Thickness (}\mu\text{m)}}$$

Fifty specimens are tested, and each five results from the highest and the lowest are discarded to obtain an average of the rest (40 results). (6) Ash Content:

Polypropylene weighing about 40 g is reduced to ashes by complete combustion in a platinum crucible by means of a gas burner and then treated in an electric furnace at about $800°C$ for 1 hour, followed by allowing to cool in a desiccator. The weight of the remaining ash is precisely measured to obtain the ash content (ppm by weight).

## EXAMPLE 1

(1) Preparation of Solid Catalyst Component:

In a 200 $\ell$-volume reaction vessel whose atmosphere had been displaced with nitrogen were charged 26 $\ell$ of hexane and 28.6 kg of titanium tetrabutoxide. The inner temperature was kept at $35°C$ while stirring at 120 rpm. To the mixture was added dropwise 53 kg of a 40 wt% hexane solution of ethylaluminum sesquichloride over 3 hours while maintaining at $35°C$. After the dropwise addition, the mixture was stirred at $35°C$ for 30 minutes and then heated to $60°C$, at which the mixture was kept for an additional 1 hour. The reaction mixture was filtered, and the filter cake was washed three times with 100 $\ell$ portions of hexane to obtain a solid product.

The resulting solid was slurried with 120 $\ell$ of hexane, and 1.5 kg of triethylaluminum was added to the slurry. The temperature was raised to $50°C$ while stirring at 100 rpm, and 3.5 kg of an ethylene monomer was slowly fed thereto at that temperature over 1 hour to effect preliminary polymerisation. After completion of the preliminary polymerization, the reaction mixture was filtered, and the filter cake was washed with 100 $\ell$ of hexane to obtain a solid product.

The resulting solid was slurried with 120 $\ell$ of heptane, and 16 $\ell$ of diisoamyl ether was added to the slurry while maintaining the system at $30°C$ to effect reaction at that temperature for 1 hour. The temperature was then raised up to $75°C$, and 15 $\ell$ of titanium tetrachloride was added thereto, followed by allowing the mixture to react at $75°C$ for an additional 1 hour. After completion of the reaction, the reaction mixture was filtered, and the filter cake was washed three times with 100 $\ell$ portions of heptane. After the washing, the above-described procedures with diisoamyl ether and titanium tetrachloride were repeated under the same conditions. After the reaction, the reaction mixture was washed six times with 100 $\ell$ portions of hexane and dried to obtain 15.2 kg of a solid catalyst component (1). The resulting solid catalyst component (1) was found to contain 22.1 wt% of a trivalent titanium atom, 6.9 wt% of diisoamyl ether, 47.7 wt% of chlorine, and 0.4 wt% of a butoxy group.

(2) Polymerisation of Vinylcyclohexane:

To 500 $\ell$ of dehydrated and purified n-heptane were added 9 kg (75 mols) of diethylaluminum chloride and 50 kg of the solid catalyst component (1) as prepared in (1) above in this order, followed by heating the mixture to $60°C$. To the mixture heated at $60°C$ was added 70 $\ell$ of vinylcyclohexane to effect polymerization for 90 minutes. There was obtained a solid catalyst (2) containing 1 g of polyvinylcyclohexane per gram of the solid catalyst component (1).

(3) Polymerization of Propylene:

To a 21 $m^3$-volume reactor were fed 250 kg/hr of heptane, 200 kg/hr of propylene, 0.26 kg/hr of the solid catalyst (2) containing polyvinylcyclohexane as prepared in (2) above, 0.18 kg/hr of diethylaluminum chloride, and 12.5 g/hr of $\epsilon$-caprolactone, and polymerization was effected under conditions of 1.5% in hydrogen concentration, $60°C$ in temperature, and 6.2 $kg/cm^2G$ in pressure. n-Butanol was added to the

4

resulting polymer slurry to a concentration of 3 wt%. The ash was removed at 75°C to obtain a polypropylene composition.

The resulting polypropylene composition had a polyvinylcyclohexane content of 2 ppm, [η] of 2.5 dℓ/g, a total ash content of 16 ppm, a CXS content of 0.5%, and a BHIS content of 97.6%. The CXS had [η] of 0.34 dℓ/g, and the BHIS had a propylene isotactic pentad fraction of 0.990.

(4) Preparation of Electrically Insulating Film:

The polypropylene composition as prepared in (3) above was mixed with 0.3 wt% of 2,6-di-t-butyl-p-cresol ("Sumilizer® BHT", a trade name of Sumitomo Chemical Co., Ltd.) and 0.3 wt% of Irganox® 1010 (a trade name of Ciba-Geigy AG for antioxidant, pentaerythrityl-tetrakis[3-(3,5-di-5-butyl-4-hydroxyphenyl)-propionate]), and the mixture was melt extruded at 280°C in a T-die extruder having a screw of 65 mm in diameter, followed by quenching with a cooling roll at 35°C to obtain a sheet having a thickness of 1 mm. The sheet was stretched five times in the longitudinal direction and 6 times in the lateral direction at 155°C and then subjected to heat setting at 150°C to obtain a biaxially stretched film having a thickness of about 20 μm.

The resulting film had a dielectric breakdown voltage of 690 V/μm.

COMPARATIVE EXAMPLE 1

A polypropylene composition was prepared in the same manner as in Example 1-(3) except for feeding the solid catalyst component (1) as prepared in Example 1-(1) at a rate of 0.13 kg/hr.

This polypropylene composition contained 0.6% of CXS having [η] of 0.34 dℓ/g, and 97.4% of BHIS having a propylene isotactic pentad fraction of 0.991. A biaxially stretched film having a thickness of about 20 m was obtained in the same manner as in Example 1-(4) except for using the above obtained polypropylene composition. The resulting film had a dielectric breakdown voltage of 650 V/μm.

EXAMPLE 2

(1) Preparation of Solid Catalyst Component:

In a 200 ℓ-volume reaction vessel equipped with a stirrer and a dropping funnel whose atmosphere had been displaced with nitrogen, 45.6 ℓ of n-heptane and 12 ℓ of titanium tetrachloride were charged, and the solution was kept at -10°C. A solution of 60 ℓ of n-heptane and 29.9 kg (27.3 ℓ) of ethylaluminum sesquichloride was slowly added dropwise thereto from the dropping funnel over 2 hours while maintaining the inner temperature between -5°C and -10°C. After the dropwise addition, the mixture was stirred at room temperature for 30 minutes, followed by heat treatment at 80°C for 1 hour. The reaction mixture was allowed to stand to effect solid-liquid separation. The solid was washed four times with 80 ℓ portions of n-heptane and dried under reduced pressure to obtain 23.2 kg of a solid product containing γ-titanium trichloride.

In a 200 ℓ-volume reaction vessel equipped with a stirrer whose atmosphere had been displaced with nitrogen were charged 110 ℓ of n-heptane, 0.97 kg (1 ℓ) of diethylaluminum chloride, and 22 kg of the above prepared solid product, and the inner temperature was maintained at 50°C. To the mixture was slowly fed 6 kg of propylene at 50°C over 30 minutes while stirring to effect preliminary polymerisation. After the reaction, the reaction mixture was subjected to solid-liquid separation, and the solid was washed twice with 50 ℓ portions of n-heptane and dried under reduced pressure to obtain 27.6 kg of a preliminarily polymerized solid.

In a 200 ℓ-volume reaction vessel equipped with a stirrer whose atmosphere had been displaced with argon were charged 43.5 ℓ of toluene and 16.0 kg of the above prepared preliminarily polymerized solid, and the mixture was maintained at 85°C. To the mixture were then added 12.9 ℓ of n-butyl ether and 0.4 ℓ of tri-n-octylamine with stirring, and the resulting mixture was allowed to react at 85°C for 15 minutes. After the reaction, a solution of 1.72 kg of iodine in 21.9 ℓ of toluene was added thereto, followed by allowing the mixture to react at 85°C for 45 minutes. After completion of the reaction, the reaction mixture was subjected to solid-liquid separation, and the solid was washed successively once with 50 ℓ of toluene and three times with 50 ℓ portions of n-heptane, followed by drying under reduced pressure to obtain 9.7 kg of a solid catalyst component (3).

(2) Polymerization of vinylcyclohexane:

Fifty killograms of the solid catalyst component (3) as prepared in (1) above (weighed out of the sum of 6 batches) was poured into a mixture comprising 500 kg of dehydrated and purified n-heptane and 9 kg (75 mols) of diethylaluminum chloride. The resulting mixture was heated to 60°C, and 650 ℓ of vinylcyclohexane was added thereto to effect polymerization for 90 minutes. There was obtained a solid catalyst (4) containing 10 g of polyvinylcyclohexane per gram of the solid catalyst component (3).

(3) Polymerization of Propylene:

Propylene was polymerized in the same manner as in Example 1-(3) except for using the solid catalyst (4) as prepared in (2) above in place of the solid catalyst (2) as used in Example 1-(3) and feeding the solid catalyst (4) at a rate of 1.4 kg/hr.

The resulting polypropylene composition had a polyvinylcyclohexane content of 18 ppm, $[\eta]$ of 2.6 dℓ/g, a total ash content of 15 ppm, a CXS content of 2.5%, and a BHIS content of 93.1%. The CXS had $[\eta]$ of 0.44 dℓ/g, and the BHIS had a propylene isotactic pentad fraction of 0.970.

(4) Preparation of Electrically Insulating Film:

A biaxially stretched film having a thickness of about 20 $\mu$m was obtained in the same manner as in Example 1-(4) except for using the polypropylene composition as obtained above.

The resulting film had a dielectric breakdown voltage of 670 V/$\mu$m.

COMPARATIVE EXAMPLE 2

A polypropylene composition was synthesized in the same manner as in Example 1-(3) except for feeding the solid catalyst component (3) as prepared in Example 2-(1) at a rate of 0.13 kg/hr.

The resulting polypropylene composition had $[\eta]$ of 2.5 dℓ/g, a total ash content of 20 ppm, a CXS content of 2.5%, and a BHIS content of 93.2%. The CXS had $[\eta]$ of 0.39 dℓ/g, and the BHIS had a propylene isotactic pentad fraction of 0.972.

A biaxially stretched film having a thickness of about 20 $\mu$m was obtained in the same manner as in Example 1-(4) except for using the polypropylene composition as prepared above.

The resulting film had a dielectric breakdown voltage of 630 V/$\mu$m.

**Claims**

1. An electrically insulating material comprising a stretched polypropylene film which is obtained by at least uniaxially stretching a polypropylene composition containing from 0.05 to 10,000 ppm by weight of a polymer of a 3-branched $\alpha$-olefin having 6 or more carbon atoms and/or a vinylcycloalkane having 6 or more carbon atoms in a monomer unit thereof, wherein said polypropylene composition has a total ash content of not more than 30 ppm by weight, a boiling heptane-insoluble portion having a propylene isotactic pentad fraction of 0.955 or more, a content of a boiling heptane-insoluble portion of from 91.0 to 98.0% by weight, and a 20°C xylene-soluble portion having an intrinsic viscosity of not more than 1.0 dl/g.

2. A material as claimed in Claim 1, wherein said polymer of a 3-branched $\alpha$-olefin and/or a vinylcycloalkane is present in a total amount of from 0.5 to 5,000 ppm by weight on the above basis.

3. A material as claimed in Claim 1, wherein said polymer of a 3-branched $\alpha$-olefin and/or vinylcycloalkane is present in a total amount of from 0.5 to 1,000 ppm by weight on the above basis.

4. A material as claimed in Claim 1, 2 or 3, wherein said 3-branched $\alpha$-olefin is 3-methylpentene-1, and said vinylcycloalkane is vinylcyclopentane or vinylcyclohexane.

5. A material as claimed in any preceding claim, wherein said polypropylene composition has a total ash content of not more than 20 ppm by weight.

6. A material as claimed in any preceding claim, having a dielectric breakdown voltage of 670 V/$\mu$m or more.

7. A material as claimed in Claim 6, having a dielectric breakdown voltage of 680 V/μm or more.

**Revendications**

1. Une matière électriquement isolante comprenant une pellicule de polypropylène étirée qui est obtenue en étirant au moins uniaxialement une composition de polypropylène contenant 0,05 à 10 000 ppm en poids d'un polymère d'une α-oléfine à trois branches en $C_6$ ou plus et/ou d'un vinylcycloalcane en $C_6$ ou plus dans son motif monomère, ladite composition de polypropylène ayant une teneur totale en cendre de pas plus de 30 ppm en poids, une portion insoluble dans l'heptane bouillant ayant une fraction de pentade isotactique de propylène de 0,955 ou plus, une teneur en portion insoluble dans l'heptane bouillant de 91,0 à 98,0 % en poids et une portion soluble dans le xylène à 20°C ayant une viscosité intrinsèque de pas plus de 1,0 dl/g.

2. Une matière selon la revendication 1, dans laquelle ledit polymère d'une α-oléfine à trois branches et/ou d'un vinylcycloalcane est présent en quantité totale de 0,5 à 5 000 ppm en poids de la composition.

3. Une matière selon la revendication 1, dans laquelle ledit polymère d'une α-oléfine à trois branches et/ou d'un vinylcycloalcane est présent en quantité totale de 0,5 à 1 000 ppm en poids de la composition.

4. Une matière selon la revendication 1, 2 ou 3, dans laquelle ladite α-oléfine à trois branches est le 3-méthylpentène-1 et ledit vinylcycloalcane est le vinylcyclopentane ou le vinylcyclohexane.

5. Une matière selon l'une quelconque des revendications précédentes, dans laquelle ladite composition de polypropylène a une teneur totale en cendre de pas plus de 20 ppm en poids.

6. Une matière selon l'une quelconque des revendications précédentes, ayant une tension de claquage diélectrique de 670 V/μm ou plus.

7. Une matière selon la revendication 6, ayant une tension de claquage diélectrique de 680 V/μm ou plus.

**Patentansprüche**

1. Elektrisches Isoliermaterial, das eine gestreckte Polypropylenfolie umfaßt, die durch wenigstens einachsiges Strecken einer Polypropylenzusammensetzung erhalten wird, die 0,05 bis 10 000 Gew.-ppm eines Polymers aus 3-verzweigtem α-Olefin mit 6 oder mehr Kohlenstoffatomen und/oder einem Vinylcycloalkan mit 6 oder mehr Kohlenstoffatomen in dessen Monomereinheit enthält, wobei die Polypropylenzusammensetzung einen Gesamtaschegehalt von nicht mehr als 30 Gew.-ppm, einen in siedendem Heptan unlöslichen Anteil an Propylen mit isotaktischen Pentadfraktion von 0,955 oder mehr, einen Gehalt an einem in siedendem Heptan unlöslichen Anteil von 91,0 bis 98 Gew.-% und einem bei 20°C in Xylen löslichen Anteil mit einer Grenzviskosität von nicht mehr als 1,0 dl/g besitzt.

2. Material wie in Anspruch 1 beansprucht, wobei das Polymer aus 3-verzweigtem α-Olefin und/oder einem Vinylcycloalkan in einer Gesamtmenge von 0,5 bis 5000 Gew.-ppm auf vorstehender Basis vorhanden ist.

3. Material wie in Anspruch 1 beansprucht, wobei das Polymer aus 3-verzweigtem α-Olefin und/oder Vinylcycloalkan in einer Gesamtmenge von 0,5 bis 1000 Gew.-ppm auf vorstehender Basis vorhanden ist.

4. Material wie in den Ansprüchen 1, 2 oder 3 beansprucht, wobei das 3-verzweigte α-Olefin 3-Methylpent-1-en ist und das Vinylcycloalkan Vinylcyclopentan oder Vinylcyclohexan ist.

5. Material wie in einem der vorstehenden Ansprüche beansprucht, wobei die Polypropylenzusammensetzung einen Gesamtaschegehalt von nicht mehr als 20 Gew.-ppm besitzt.

6. Material wie in einem der vorstehenden Ansprüche beansprucht mit einer dielektrischen Durchschlags-

pannung von 670 V/μm oder mehr.

7. Material wie in Anspruch 6 beansprucht mit einer dielektrischen Durchschlagsspannung von 680 V/μm oder mehr.